# EUROPÄISCHE PATENTSCHRIFT

(11) **EP 1 516 018 B1**
(45) Veröffentlichungstag und Bekanntmachung des Hinweises auf die Patenterteilung: **23.11.2005**
(21) Anmeldenummer: 03735563.3
(22) Anmeldetag: 06.06.2003
(51) Int. Cl.: C09B 5/62

(54) **VERFAHREN ZUR UEBERFUEHRUNG VON PERYLEN-3,4:9, 10-TETRACARBONSAEUREDIIMIDEN IN EINE FUER DIE ANWENDUNG ALS FLUORESZENZFARBMITTEL GEEIGNETE FORM**
METHOD FOR CONVERTING PERYLEN-3,4:9,10-TETRACARBOXYLIC ACID DIIMIDES INTO A FORM SUITABLE FOR USE AS A FLUORESCENT DYE
PROCEDE POUR TRANSFORMER DES DIIMIDES D'ACIDE PERYLENE-3,4:9,10-TETRACARBOXYLIQUE SOUS UNE FORME ADAPTEE A UN USAGE COMME COLORANT FLUORESCENT

(30) Priorität: 12.06.2002 DE 10226181
(43) Veröffentlichungstag der Anmeldung: 23.03.2005
(73) Patentinhaber: BASF Aktiengesellschaft, 67056 Ludwigshafen (DE)
(72) Erfinder: ERK, Peter, 67227 Frankenthal (DE); SCHÄFER, Simone, 67483 Kleinfischlingen (DE); BÖHM, Arno, 68305 Mannheim (DE); BLASCHKA, Peter, 67069 Ludwigshafen (DE); ARMS, Harald, 67591 Hohen-Sülzen (DE); HELFER, Willi, 67159 Friedelsheim (DE)
(86) Internationale Anmeldenummer: PCT/EP2003/005937
(87) Internationale Veröffentlichungsnummer: WO 2003/106566

(56) Entgegenhaltungen:
- EP-A- 0 055 363
- DE-A- 3 016 765
- DE-A- 3 049 215
- RADEMACHER A ET AL: "LOESLICHE PERYLEN-FLUORESZENZFARBSTOFFE MIT HOHER PHOTOSTABILITAET" CHEMISCHE BERICHTE, VERLAG CHEMIE GMBH. WEINHEIM, DE, Bd. 115, Dezember 1982 (1982-12), Seiten 2927-2934, XP000881309 ISSN: 0009-2940
- GRASER F ET AL: "KRISTALLSTRUKTUR UND FARBE BEI PERYLEN-3,4:9,10-BIS(DICARBOXIMID)-PIG MENTEN//CRYSTAL STRUCTURE AND COLOR OF PERYLENE-3,4:9,10-BIS(DICARBOX IMIDE) PIGMENTS" LIEBIGS ANNALEN DER CHEMIE, VERLAG CHEMIE GMBH. WEINHEIM, DE, 1980, Seiten 1994-2011, XP001070159 ISSN: 0170-2041
- SYEBOLD, G. ET AL: "New perylene and violanthrone dyestuffs for fluorescent collectors" DYES AND PIGMENTS (1989), 11(4), 303-17 , XP009016080
- LEE, SANG KWON ET AL: "Electrochemistry, Spectroscopy and Electrogenerated Chemiluminescence of Perylene, Terrylene, and Quaterrylene Diimides in Aprotic Solution" JOURNAL OF THE AMERICAN CHEMICAL SOCIETY (1999), 121(14), 3513-3520 , XP002252150

## Beschreibung

Die vorliegende Erfindung betrifft ein neues Verfahren zur Überführung von Perylen-3,4:9,10-tetracarbonsäurediimiden der allgemeinen Formel I (im folgenden kurz "Perylimide I" genannt) 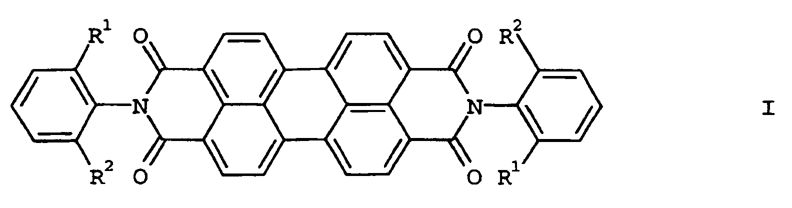 in der R¹ und R² unverzweigtes, verzweigtes oder cyclisches C₁-C₈-Alkyl bedeuten, in eine für die Anwendung als Fluoreszenzfarbmittel geeignete Form.

Außerdem betrifft die Erfindung kristalline Solvate der Perylimide I, die pro mol Perylimid I 1 oder 2 mol Lösungsmittel enthalten.

Weiterhin betrifft die Erfindung verschiedene kristalline Formen von N,N'-Bis-(2,6-diisopropylphenyl)perylen-3,4:9,10-tetracarbonsäurediimid, die durch Röntgenpulverdiagramme (CuK_{α}) mit wesentlichen Linien bei folgenden d-Werten gekennzeichnet sind:
Form A ("Perylimid A"): 10.2, 9.60, 8.17, 7.60, 7.07, 6.89, 6.02, 5.64, 4.89, 4.79, 4.63, 3.93, 3.81, 3.53 und 3.43 Å;
Form B ("Perylimid B"): 15.3, 7.68, 7.32, 7.15, 5.99, 5.59, 5.33, 4.98, 4.24, 3.86 und 3.235 Å;
Form C ("Perylimid C"): 10.67, 9.88, 9.36, 7.82, 7.16, 6.89, 5.74, 5.49, 4.68, 4.085, 3.354 und 3.252 Å;
Form D ("Perylimid D"): 9.7, 8.6, 7.85, 6.88, 4.83, 4.-13 und 3.81 Å;
Form E ("Perylimid E"): 15.2, 14.7, 8.04, 7.76, 7.36, 6.43, 5.59, 4.99, 4.25, 4.14 und 3.863 Å.

Nicht zuletzt betrifft die Erfindung die Verwendung der erfindungsgemäß hergestellten Perylimide I und der Perylimide A bis E als Fluoreszenzfarbstoffe zum Einfärben von organischen und anorganischen polymeren Materialien sowie als Emittermaterialien in elektrooptischen Bauteilen.

In der EP-A-55 363 werden verschiedene Perylimide, die an den beiden Imidstickstoffatomen durch alkyl- oder chlorsubstituiertes Phenyl substituiert sind, u.a. auch N,N'-Bis-(2,6-diisopropylphenyl)perylimid, beschrieben.

Die Herstellung dieser Perylimide erfolgt dabei durch Umsetzung von Perylen-3,4:9,10-tetracarbonsäuredianhydrid mit dem entsprechend substituierten Anilin in Gegenwart einer Zinkverbindung und teilweise auch von Essigsäure als Katalysator in Chinolin. Die Perylimide werden dann durch Zugabe von Methanol ausgefällt, abfiltriert und mit Methanol und Wasser gewaschen. Zur Entfernung unumgesetzten Perylen-3,4:9,10-tetracarbonsäurediänhydrids werden die so isolierten Perylimide meist noch in heißer Carbonatlösung aufgerührt.

Die EP-A-55 363 schlägt eine weitere Variante zur Isolierung der Perylimide vor, bei der das gesamte Reaktionsgemisch zunächst durch Zugabe eines das Perylimid lösenden Lösungsmittels, wie N-Methylpyrrolidon, Dimethylacetamid und Dimethylformamid, und Erhitzen in Lösung gebracht wird, die Lösung filtriert wird und das Perylimid durch Zugabe niederer Alkohole, wie Methanol, gegebenenfalls im Gemisch mit Wasser, wieder ausgefällt wird. Die Perylimide sollen dabei meistens in einer ausreichend reinen Form anfallen.

Nach unseren Untersuchungen werden bei dieser Art der Fällung aber nur Produkte unzureichender Reinheit erhalten, die Nebenprodukte, insbesondere N-substituiertes Perylen-3,4-dicarbonsäureimid, in größeren Mengen (in der Regel > 10%) enthalten, und weitgehend röntgenamorph sowie feinkristallin und schlecht filtrierbar sind.

Zur weiteren Reinigung schlägt die EP-A-55 363 Umfällen aus Schwefelsäure sowie Umkristallisation vor, ohne weitere Angaben hierzu zu machen.

Der Erfindung lag die Aufgabe zugrunde, ein Verfahren bereitzustellen, das eine effiziente Reinigung von Perylimiden I ermöglicht und bei dem die Perylimide I direkt in für die Anwendung als Fluoreszenzfarbmittel geeigneter Form anfallen.

Demgemäß wurde ein Verfahren zur Überführung von Perylen-3,4:9,10-tetracarbonsäurediimiden der allgemeinen Formel I 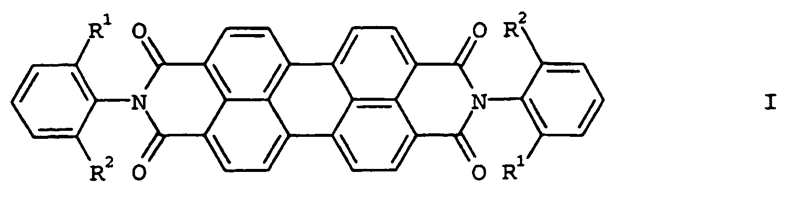 in der R¹ und R² unverzweigtes, verzweigtes oder cyclisches C₁-C₈-Alkyl bedeuten, in eine für die Anwendung als Fluoreszenzfarbmittel geeignete Form gefunden, welches dadurch gekennzeichnet ist, daß man
a) die Perylen-3,4:9,10-tetracarbonsäurediimide in einem organischen oder anorganischen Lösungsmittel, dessen Moleküle ein molekulares Volumen von ≤ 230 Å³ aufweisen, bei 0 bis 250°C löst oder suspendiert,
b1) die in Schritt a) erhaltene Lösung auf oder unter die Kristallisationstemperatur abkühlt und, im Fall eines organischen Lösungsmittels, gewünschtenfalls gleichzeitig solange überschüssiges Lösungsmittel entfernt, bis sich erste Kristalle bilden, oder, im Fall eines anorganischen Lösungsmittels, solange Wasser oder verdünnte wäßrige Lösungen des Lösungsmittels zugibt, bis sich erste Kristalle bilden, und die Lösung zur weiteren Kristallisation bei dieser Temperatur hält oder
b2) die in Schritt a) erhaltene Suspension auf oder unter die Kristallisationstemperatur abkühlt, wenn die Temperatur in Schritt a) über der Kristallisationstemperatur lag, und die Suspension zur weiteren Kristallisation bei dieser Temperatur hält,
c) die in Schritt b) gebildeten Solvatkristalle isoliert und
d) das Lösungsmittel anschließend aus den Solvatkristallen entfernt.

Wesentlich für das erfindungsgemäße Verfahren ist, daß die in Schritt a) verwendeten Lösungsmittelmoleküle ein molekulares Volumen von ≤ 230 Å³, bevorzugt ≤ 200 Å³ und besonders bevorzugt ≤ 180 Å³ haben und daher mit dem Perylimid I stabile binäre Kristallphasen (Solvate oder auch Clathrate) bilden können, die bis zu 2 Moleküle Lösungsmittel je Molekül Perylimid I enthalten.

Die genannten molekularen Volumen können nach der von Gavezzotti publizierten Methode (J. Amer. Chem. Soc. 1989, 11, p. 1835) aus der Struktur des Moleküls berechnet werden.

Vorzugsweise werden Lösungsmittel verwendet, in denen sich das Perylimid I, gegebenenfalls nach Erhitzen, löst, es können jedoch auch Lösungsmittel eingesetzt werden, in denen sich das Perylimid I bei der Behandlungstemperatur nur teilweise löst. Die Umwandlung in die entsprechenden Solvate erfolgt dann in Suspension.

Dementsprechend eignen sich als organische Lösungsmittel insbesondere (der Begriff Alkyl soll dabei auch Cycloalkyl, insbesondere Cyclohexyl, umfassen):
- Di-C₁-C₄-alkylsulfoxide, wie Dimethylsulfoxid;
- Sulfolan;
- unsubstituierte und N-C₁-C₆-alkylsubstituierte C₄-C₆-Lactame, wie Pyrrolidon, N-Methylpyrrolidon, N-Cyclohexylpyrrolidon, N-Octylpyrrolidon, Caprolactam und N-Ethylcaprolactam;
- unsubstituierte und N-C₁-C₆-alkylsubstituierte aliphatische C₁-C₆-Carbonsäureamide, wie Formamid, Dimethylformamid, Dimethylacetamid, Benzamid und N-Acetylmorpholin;
- aliphatische Nitrile mit 2 bis 12 C-Atomen, wie Acetonitril und 2-Methoxypropionitril;
- aromatische Nitrile, die durch C₁-C₈-Alkyl, C₁-C₈-Alkoxy und/oder Halogen substituiert sein können, wie Benzonitril und 3-Methylbenzonitril;
- aliphatische C₁-C₁₂-Carbonsäuren und deren C₁-C₆-Alkylester mit einer Gesamtzahl an Kohlenstoffatomen von ≤ 12, wie Ameisensäure, Essigsäure, Propionsäure, 2-Ethylhexansäure und Essigsäureethylester;
- Hydroxy-C₂-C₆-carbonsäuren und deren Ester, wie Milchsäure, Butyrolacton, Valerolacton und Caprolacton;
- C₂-C₆-Alkylencarbonate, wie Ethylencarbonat und Propylencarbonat;
- Benzoesäuren, wie Benzoesäure, Phthalsäure und Terephthalsäure;
- Naphthoesäuren, wie α- und β-Naphthoesäure;
- Benzoesäure-C₁-C₆-alkylester, wie Benzoesäuremethylester und 3-Methylbenzoesäureethylester;
- Phthalsäuredi-C₁-C₂-alkylester, wie Phthalsäurediethylester;
- einwertige und mehrwertige gesättigte und ungesättigte aliphatische und cycloaliphatische C₄-C₁₂-Alkohole, wie Butanol, iso-Amylalkohol, Cyclohexanol, Octanol, 3-Methyl-1-pentin-3-ol, Methoxypropanol, Furfurylalkohol, Tetrahydrofurfurylalkohol und 1,5-Pentandiol;
- araliphatische Alkohole, wie Benzylalkohol, 2-Phenylethanol und 4-Methoxybenzylalkohol;
- Mono- und Oligo-C₂-C₃-alkylenglykolmono- und -di-C₁-C₈-alkyl- und -monophenylether, wie Ethylenglykolmonomethylether, Ethylenglykolmonobutylether, Ethylenglykolmonophenylether und Diethylenglykoldimethylether;
- aliphatische C₃-C₁₂-Ketone, wie Aceton, Methylisobutylketon, Diacetonalkohol, Cyclohexanon und 2-Methylcyclohexanon;
- aromatische Ketone, die durch C₁-C₈-Alkyl, C₁-C₈-Alkoxy und/oder Halogen substituiert sein können, wie Isophoron, Acetophenon, Propiophenon, 3-Chloracetophenon und 3-Ethylacetophenon;
- aliphatische und cycloaliphatische C₄-C₁₂-Ether, wie Methyl-tert.-butylether, Ethylisobutylether, 2-Ethylhexylmethylether, Tetrahydrofuran und Dioxan;
- aromatische Ether, die durch C₁-C₈-Alkyl, C₁-C₈-Alkoxy und/oder Halogen substituiert sein können, wie Diphenylether;
- Heterocyclen, wie Pyridin, Picolin, Lutidin, Chinolin, Methylchinolin, Imidazol, Methylimidazol und 1,3-Dimethyl-2-imidazolidinon;
- aromatische Kohlenwasserstoffe, die durch C₁-C₈-Alkyl, C₁-C₈-Alkoxy, C₁-C₆-Alkylamino, Di-C₁-C₃-alkylamino, Chlor und/oder Nitro substituiert sein können, wie Toluol, o-, mund p-Xylol, Ethylbenzol, Cumol, Methoxybenzol, Chlorbenzol, o-Dichlorbenzol, 1,2,4-Trichlorbenzol, Nitrobenzol, Phenol, 3-Methylphenol, p-Chlorphenol, o-Nitrophenol, N-Hydroxyethylanilin, 1,2,3,4-Tetrahydronaphthalin, 2-Chlornaphthalin, 2-Methoxynaphthalin und Dimethylnaphthalin;
- aliphatische und cycloaliphatische C₆-C₁₈-Kohlenwasserstoffe, wie Limonen, Dekalin und Methylcyclohexan;
- Chlorkohlenwasserstoffe, wie Methylenchlorid, Chloroform, Tetrachlormethan, Dichlorethan, Trichlorethan und Tetrachlorethan.

Selbstverständlich können auch Mischungen dieser Lösungsmittel zum Einsatz kommen.

Bevorzugte organische Lösungsmittel sind Xylol, Toluol, N-Methylpyrrolidon, Dimethylacetamid, Dimethylformamid, Methylisobutylketon, Methylenchlorid, Ethylenglykolmonophenylether und Ethylenglykolmonobutylether.

Es ist auch möglich, Kombinationen dieser Lösungsmittel einzusetzen, also zunächst ein Solvat mit einem ersten Lösungsmittel (z.B. N-Methylpyrrolidon) zu bilden und das Lösungsmittel in diesem Solvat durch Behandlung mit einem zweiten Lösungsmittel auszutauschen (z.B. Essigsäure).

Als anorganische Lösungsmittel eignen sich vor allem Säuren, insbesondere Schwefelsäure.

In Schritt a) des erfindungsgemäßen Verfahrens wird das Perylimid I entweder in dem Lösungsmittel gelöst oder darin suspendiert.

Dementsprechend kann man bei Verwendung organischer Lösungsmittel erfindungsgemäß wie folgt vorgehen: Man erhitzt eine Mischung von Perylimid I und Lösungsmittel auf eine Temperatur, bei der sich das Perylimid I im Lösungsmittel löst, kühlt die entstandene Lösung dann in Schritt b1) auf oder unter die Kristallisationstemperatur des Perylimids I ab und hält die Lösung zur weiteren Kristallisation bei dieser Temperatur; die Kristallisation kann dabei gewünschtenfalls durch gleichzeitige Entfernung überschüssigen Lösungsmittels gefördert werden. Oder man suspendiert das Perylimid I in dem Lösungsmittel vorzugsweise bei erhöhter Temperatur zur Steigerung des Reinigungseffekts, kühlt die entstandene Suspension dann in Schritt b2) auf oder unter die Temperatur ab, bei der die Solvatkristalle auskristallisieren, und hält die Suspension zur weiteren Kristallisation bei dieser Temperatur.

Bei Verwendung anorganischer Lösungsmittel kann man analog wie folgt vorgehen: Man löst das Perylimid I bei geeigneter Temperatur in weitgehend wasserfreiem bis hochkonzentriertem Lösungsmittel und leitet die Kristallisation in Schritt b1) durch Verdünnen des Lösungsmittels mit Wasser oder wäßrigen Lösungen des Lösungsmittels ein. Oder man rührt das Perylimid I mehrere Stunden direkt in einem niedrigerkonzentrierten Lösungsmittel vorzugsweise bei Temperaturen um Raumtemperatur, wobei sich ebenfalls Solvatkristalle bilden.

Dies soll am Beispiel des besonders bevorzugten Lösungsmittels Schwefelsäure näher erläutert werden. Hier empfiehlt es sich bei der ersten Variante, das Perylimid I bei annähernd Raumtemperatur (ca. 20 - 30°C) in etwa 96 bis 100 gew.-%iger Schwefelsäure zu lösen, die Schwefelsäurekonzentration dann durch Zugabe von Wasser oder einer verdünnteren Schwefelsäure (z.B. 20 gew.-%iger Schwefelsäure) langsam auf etwa 70 bis 93 Gew.-% zu erniedrigen und dadurch die Kristallisation eines Sulfates des Perylimids I zu bewirken. Bei der zweiten Variante verwendet man direkt etwa 70 bis 90 gew.-%ige Schwefelsäure.

Die in Schritt c) des erfindungsgemäßen Verfahrens isolierten ebenfalls erfindungsgemäßen kristallinen Solvate haben je nach der molekularen Größe des Lösungsmittels eine molare Zusammensetzung von Lösungsmittel zu Perylimid I von 1 : 1 (z.B. bei Xylol-, N-Methylpyrrolidon-, Methoxybenzol-, Dimethylacetamid-Solvaten) oder 2 : 1 (z.B. bei Methylenchlorid-, Essigsäure-Solvaten). Trotz gleicher Bruttozusammensetzung können die kristallinen Phasen unterschiedliche Kristallstrukturen aufweisen. Bei einigen dieser Solvate (z.B. bei Methylenchlorid- und Essigsäure-Solvaten) können die Lösungsmittelmoleküle das Perylimidwirtsgitter verlassen, ohne daß sich dessen kristalline Struktur nennenswert ändert. In solchen Fällen können auch nichtstöchiometrische binäre Phasen von Lösungsmittel und Perylimid I gebildet werden.

Die genaue Zusammensetzung der Schwefelsäure-Solväte kann in der Regel nicht bestimmt werden, da die Solvate bei der Isolierung rasch Schwefelsäure verlieren. Eine Charakterisierung durch Röntgenpulverdiffraktometrie ist hier jedoch genau wie bei den Solvaten mit organischen Lösungsmitteln möglich.

Anschließend wird in Schritt d) das Lösungsmittel aus den Solvatkristallen entfernt, wobei weitgehend die in Schritt b) gebildeten kristallinen Strukturen erhalten bleiben oder aber neue kristalline Phasen gebildet werden. Die Entfernung des Lösungsmittels geschieht zweckmäßigerweise durch Trocknung der Solvatkristalle, gegebenenfalls im Vakuum und bei erhöhter Temperatur. Die Solvatkristalle können gewünschtenfalls vor der Trocknung zusätzlich mit einem Lösungsmittel, das selbst kein Solvat bildet, vorzugsweise mit Wasser oder Gemischen organischer Lösungsmittel mit Wasser, behandelt (gewaschen) worden sein.

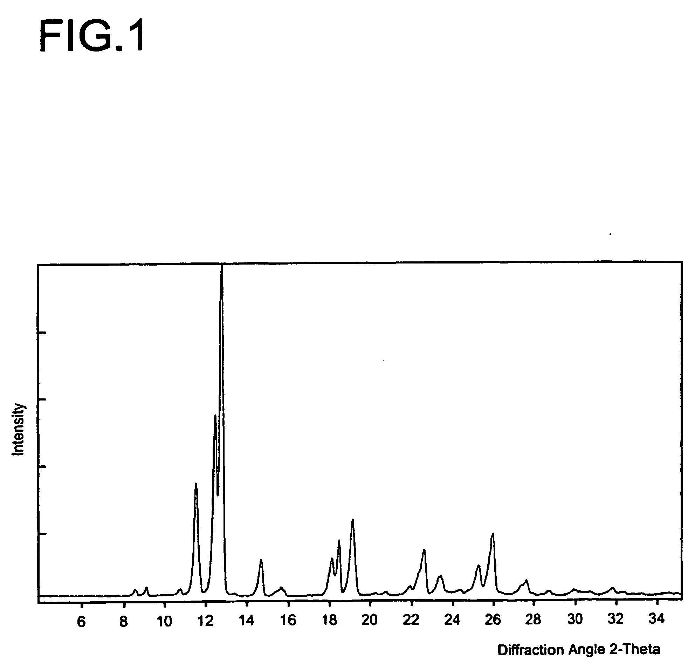

Die erfindungsgemäß erhaltenen kristallinen Formen der Perylimide I können durch Röntgenpulverdiffraktometrie sowie Einkristallstrukturanalyse charakterisiert werden. Dabei wurden die ebenfalls erfindungsgemäßen kristallinen Perylimide A bis E gefunden, die durch Kristallisation aus Methylenchlorid (Perylimid A), Essigsäure (Perylimid B), Schwefelsäure (Perylimid C und D) und M-Methylpyrrolidon/Essigsäure (Perylimid E) erhältlich sind. Die Röntgenpulverdiagramme dieser Perylimide sind in Fig. 1 und 3 bis 6 abgebildet.

Das erfindungsgemäße Verfahren weist eine Reihe von Vorteilen auf, die nicht vorherzusehen waren. So wird nicht nur die Kristallisation der Perylimide I erleichtert, sondern es werden auch grobkristalline Kristallisate gebildet, die gut filtrierbar sind, ohne nennenswerte Produktverluste gewaschen werden können und zudem hohe Reinheiten von in der Regel > 90% aufweisen (bei der Synthese anfallende Nebenprodukte wie N-Monoalkylierungsprodukte können problemlos entfernt werden). Durch Verwendung von Schwefelsäure als Lösungsmittel kann der Reinheitsgrad im allgemeinen durch zusätzliche Entfernung von bei der Synthese anfallenden Decarboxylierungsprodukten noch weiter auf > 95% gesteigert werden, so daß unabhängig von der Art der Synthese der eingesetzten Rohwaren I Produktqualitäten auf einfache Weise erhalten werden können, die sonst nur durch Chromatographie zugänglich sind. Nicht zuletzt zeichnen sich die gebildeten Kristallisate durch hohe Auflösegeschwindigkeiten aus, wodurch sie besonders leicht in Kunststoffe eingearbeitet können.

Dementsprechend eignen sich die erfindungsgemäß erhaltenen Perylimide I, insbesondere auch die Perylimide A bis E, hervorragend als Fluoreszenzfarbstoffe zum Einfärben von organischen und anorganischen polymeren Materialien sowie als Emittermaterialien in elektrooptischen Bauteilen, z.B. Displays und emissiven Farbfiltern, wofür sich vor allem das Perylimid A aufgrund seiner ausgeprägten Festkörperfluoreszenz anbietet.

### Beispiele

Überführung von N,N'-Bis-(2,6-diisopropylphenyl)perylen-3,4:9,10-tetracarbonsäurediimid (Perylimid Ia) in eine für die Anwendung als Fluoreszenzfarbmittel geeignete Form

### Beispiel 1

6 g des Perylimids Ia wurden in 800 ml siedendem Methylenchlorid gelöst und weitere 60 min bei der Siedetemperatur des Lösungsmittels gerührt. Nach Filtration unter Druck über eine G4-Glasfritte wurde das Filtrat weitere 60 min unter Rückfluß gerührt und dann durch Wärmeaustausch mit der Umgebung auf Raumtemperatur (ca. 20°C) abgekühlt. Dann wurde bei dieser Temperatur durch Anlegen eines Vakuums von ca. 50 kPa langsam solange Methylenchlorid abgezogen, bis erste Kristalle entstanden. Dann wurde auf -20°C abgekühlt. Nach eintägiger Lagerung bei dieser Temperatur wurden die gebildeten Kristalle abfiltriert, mit kaltem Methylenchlorid gewaschen und bei 20°C getrocknet.

Röntgenstrukturanalyse bei 203 K ergab ein Solvat mit 2 Molekülen Methylenchlorid je Molekül Perylimid Ia mit folgenden kristallographischen Daten: Raumgruppe P 2₁/n, Z = 2, a = 1003.2(2) pm, b = 1907.8(6) pm, c = 1156.3(2) pm, β = 96.794(10)°, R1 = 0.1151, wR2 = 0.2308.

Durch vollständige Entfernung des Methylenchlorids im Vakuum wurde das Perylimid Ia in der kristallinen Form A (Perylimid A) mit wesentlichen Linien im Röntgenpulverdiagramm (CuK_{α}) bei folgenden d-Werten erhalten (Fig. 1): 10.2, 9.60, 8.17, 7.60, 7.07, 6.89, 6.02, 5.64, 4.89, 4.79, 4.63, 3.93, 3.81, 3.53 und 3.43 Å. Durch Rietveld-Verfeinerung des Pulverdiagramans wurden für das Perylimid A folgende kristallographische Daten ermittelt: Raumgruppe P 2₁/c, Z = 2, a = 1207.3(3) pm, b = 1918.3(5) pm, c = 1433.1(4) pm, β = 141.10(1)°, R1 = 0.1615, wR2 = 0.2041.

### Beispiel 2

10,1 g einer Mischung aus 6 Teilen des Perylimids Ia und 4 Teilen N-(2,6-Diisopropylphenyl)perylen-3,4-dicarbonsäureimid wurden in 1200 ml p-Xylol in der Siedehitze gelöst. Nach Filtration bei dieser Temperatur über eine G4-Glasfritte wurde das Filtrat auf Raumtemperatur abgekühlt und bei 20°C durch Überleiten eines leichten Luftstroms auf die Hälfte des Volumens eingeengt. Nach der Bildung erster Kristalle wurde das Gefäß verschlossen. Die nach 8 d gebildeten roten Rhomboeder wurden abfiltriert und mit wenig kaltem Petrolether gewaschen.

Chromatographisch konnte in den Kristallen kein N-(2,6-Diisopropylphenyl)perylen-3,4-dicarbonsäureimid nachgewiesen werden, wodurch belegt ist, daß das erfindungsgemäße Verfahren eine wirksame Abtrennung der Decarboxylierungsprodukte aus Rohwaren der Perylimiden I ermöglicht.

Röntgenstrukturanalyse ergab ein Solvat von Perylimid Ia mit p-Xylol im Molverhältnis 1 : 1 mit folgenden kristallographischen Daten: Raumgruppe P ca2₁, a = 1825.1(3) pm, b = 830.9(1) pm, c = 2988.9(5) pm, R1 = 0.0638, wR2= 0.1682.

### Beispiel 3

Eine Mischung von 3 g des Perylimids Ia und 30 ml N-Methylpyrrolidon (NMP) wurde 8 d bei 80°C gerührt. Nach Abkühlen auf 20°C wurde der entstandene Kristallbrei abfiltriert und kurz mit kalten NMP gewaschen.

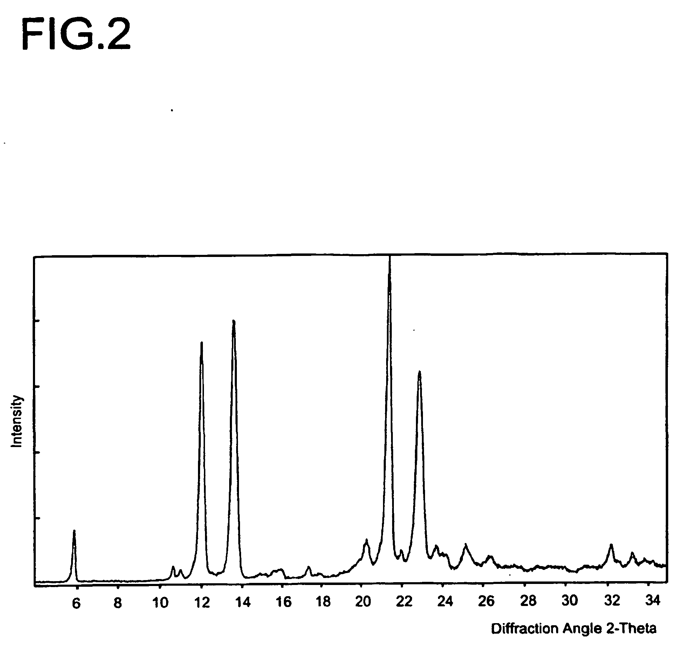

Das Röntgenpulverdiagramm (CuK_{α}) des NMP-feuchten kristallinen Produkts hatte wesentliche Linien bei d-Werten von 15.3, 8.36, 7.64, 7.36, 6.48, 5.95, 5.85, 5.65, 5.56, 5.10, 4.36, 4.14 und 3.87 Å (abgebildet in Figur 2). Der Vergleich der Röntgenpulverdiagramme von Beispiel 2 und Beispiel 3 ergab die Isomorphie der beiden Solvate.

Die unter schonenden Bedingungen getrockneten Kristalle verloren unter thermischer Belastung bei 201-218°C insgesamt 12,1% ihres Gewichts, was dem Verlust von 1 mol NMP aus einem Solvat der molaren Zusammensetzung 1 : 1 entspricht (ber. 12,2 Gew.-%).

### Elementaranalyse (Gew.-% ber./gef.):

C: 78,6/78,2; H: 6,4/6,8; N: 5,2/5,2; O 9,9/10,4.

### Vergleichsbeispiel V

6 g des Perylimids Ia wurden in 200 ml NMP bei 100°C gelöst. Nach 20minütigem Rühren bei dieser Temperatur wurde die Lösung bei 100°C filtriert und in 5 min unter kräftigem Rühren in 2000 ml einer 1 : 1-Mischung (V/V) von Methanol und Wasser gegossen.

Der ausgefallene rote, voluminöse Niederschlag wurde abfiltriert, mit Wasser gewaschen und 24 h bei 100°C im Vakuum getrocknet.

Das erhaltene Material zeigte im Röntgenpulverdiagramm lediglich 4 breite Linien, deren mittlere d-Werte (15.7, 6.95, 5.88, 3.47 Å) den molekularen Dimensionen des Perylimids Ia entsprechen, und erwies sich damit als weitgehend röntgenamorph.

### Beispiel 4

Eine Mischung von 2 g des Perylimids Ia und 50 ml Eisessig wurde 14 h bei Raumtemperatur gerührt. Das Kristallisat wurde abfiltriert und hälftig aufgeteilt.

Die eine Hälfte wurde bei Raumtemperatur an der Luft getrocknet. Das Röntgenpulverdiagramm (CuK_{α}) des so getrockneten Produkts hatte wesentliche Linien bei d-Werten von 14.7, 8.64, 7.73, 7.27, 6.69, 6.14, 5.75, 5.68, 4.98, 4.54, 4.49, 4.35, 4.13 und 3.87 Å.

Unter thermischer Belastung bei 115-196°C verloren die an der Luft getrockneten Kristalle insgesamt 13,8% ihres Gewichts, was dem Verlust von 2 mol Essigsäure aus einem Solvat der molaren Zusammensetzung 2 : 1 entspricht (ber. 14,4%).

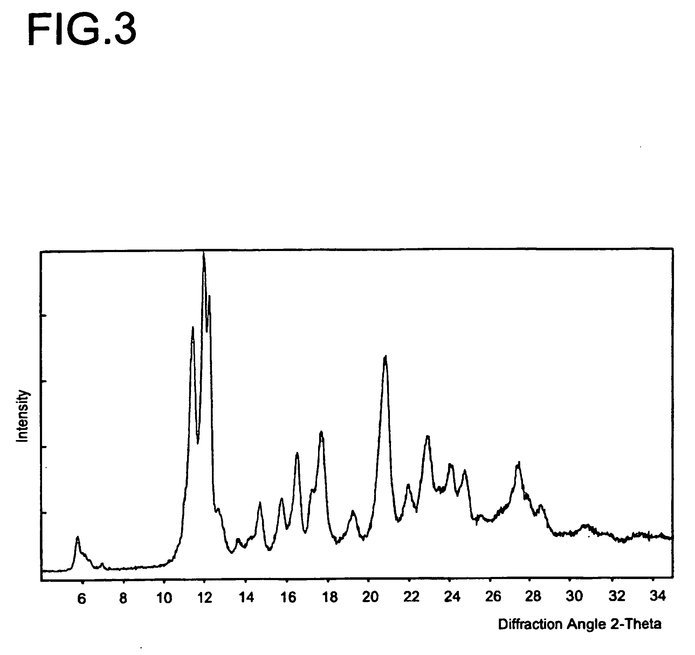

Die andere Hälfte wurde bei 80°C im Vakuum getrocknet. Dabei wurde essigsäurefreies Perylimid Ia in der kristallinen Form B (Perylimid B) mit wesentlichen Linien im Röntgenpulverdiagramm (CuK_{α}) bei folgenden d-Werten erhalten (Figur 3): 15.3, 7.68, 7.32, 7.15, 5.99, 5.59, 5.33, 4.98, 4.24, 3.86 und 3.235 Å.

### Beispiel 5

3 g des Perylimids Ia wurden in 50 ml Methoxybenzol in der Siedehitze gelöst. Die Lösung wurde dann langsam zunächst auf Raumtemperatur und dann weiter im Eisbad abgekühlt. Das Kristallisat wurde abfiltriert, mit wenig kaltem Methoxybenzol gewaschen und 24 h bei einem Druck von 10 kPa bei Raumtemperatur getrocknet.

Das Röntgenpulverdiagramm des in Form glänzender Plättchen vorliegenden Perylimids Ia deutete darauf hin, daß ein Gemisch verschiedener Solvatphasen der molaren Zusammensetzung 1 : 1 vorlag. Durch Mörsern veränderten sich die Linienlagen erneut, während die Zusammensetzung unverändert blieb.

Elemeritaranalyse (Gew.-% ber./gef.):
C: 80,7/80,4; H: 6,2/6,1; N: 3,4/3,4; O: 9,8/9,7.

### Beispiel 6

2 g des Perylimids Ia wurden in 150 ml Dimethylacetamid in der Siedehitze gelöst. Die Lösung wurde dann langsam auf Raumtemperatur abgekühlt. Nach dreitägiger Lagerung bei Raumtemperatur wurde das Kristallisat abfiltriert, mit wenig kaltem Dimethylacetamid gewaschen und 24 h bei einem Druck von 10 kPa bei Raumtemperatur getrocknet.

Elementaranalyse des in Form glänzender Plättchen vorliegenden Perylimids Ia ergab ein Solvat der molaren Zusammensetzung 1 : 1, dessen Röntgenpulverdiagramm (CuK_{α}) wesentliche Linien bei folgenden d-Werten zeigte: 15.2, 7.60, 7.35, 6.46, 5.07, 4.34, 3.87 und 3.47 Å.

Elementaranalyse (Gew.-% ber./gef.):
C: 78,3/77,9; H: 6,4/6,4; N: 5,3/5,4.

### Beispiel 7

2 g des Perylimids Ia wurden in 40 g Oleum (100 gew.-%iger Schwefelsäure) bei Raumtemperatur gelöst. Nach 15-minütigem Rühren wurde die Schwefelsäurekonzentration durch Zudosieren von insgesamt 10,2 ml 20 gew.-%iger Schwefelsäure in 120 min unter Einhaltung einer Temperatur von 25-30°C auf 82 Gew.-% erniedrigt. Die entstandene Kristallsuspension wurde 48 h bei 20°C gerührt und dann über eine G4-Glasfritte filtriert.

Das erhaltene rote Kristallisat wurde schwefelsäurefeucht unter Luftabschluß durch ein Debye-Scherrer-Diagramm charakterisiert. Wesentliche Linien lagen bei folgenden d-Werten: 10.24, 7.80, 6.77, 6.24, 5.61, 5.34, 4.58, 4.42, 4.01, 3.805 und 3.415 Å, Bei analoger Versuchsführung und Einstellung von Schwefelsäureendkonzentrationen von 80 Gew.-%, 84 Gew.-% und 86 Gew.-% wurden Kristallisate mit identischen Röntgenpulverdiagrammen erhalten.

### Beispiel 8

Eine Mischung von 2 g des Perylimids Ia und 40 g 84 gew.-%iger Schwefelsäure wurde 48 h bei 20°C gerührt. Der entstandene Kristallbrei wurde über eine G4-Glasfritte filtriert.

Das erhaltene rote Kristallisat wurde schwefelsäurefeucht unter Luftabschluß durch ein Debye-Scherrer-Diagramm (CuK_{α}) charakterisiert. Wesentliche Linien lagen bei folgenden d-Werten: 10.24, 7.80, 6.77, 6.24, 5.61, 5.34, 4.58, 4.42, 4.01, 3.805 und 3.415 Å.

Bei analoger Versuchsführung und Einstellung von Schwefelsäureendkonzentrationen von 86 Gew.-% und 90 Gew.-% wurden Kristallisate mit identischen Röntgenpulverdiagrammen erhalten.

### Beispiel 9

Eine Mischung von 2 g des Perylimids Ia und 40 g 82 gew.-%iger Schwefelsäure wurde 48 h bei 20°C gerührt. Der entstandene Kristallbrei wurde über eine G4-Glasfritte filtriert.

Das erhaltene rote Kristallisat wurde schwefelsäurefeucht unter Luftabschluß durch ein Debye-Scherrer-Diagramm (CuK_{α}) charakterisiert. Wesentliche Linien lagen bei folgenden d-Werten: 9.74, 9.27, 7.73, 7.13, 5.80, 4.7 und 4.11 Å.

Bei analoger Versuchsführung und Einstellung von Schwefelsäureendkonzentrationen von 80 Gew.-% wurde ein Kristallisat mit identischem Röntgenpulverdiagramm erhalten.

### Beispiel 10

12,5 g des Perylimids Ia wurden in 250 g Oleum (100 gew.-%iger Schwefelsäure) bei Raumtemperatur gelöst. Nach 15-minütigem Rühren wurde die Schwefelsäurekonzentration durch Zudosieren von insgesamt 23 ml 20 gew.-%iger Schwefelsäure in 300 min unter Einhaltung einer Temperatur von 25-30°C auf 92,4 Gew.-% erniedrigt. Die entstandene Kristallsuspension wurde 4 h gerührt und dann über eine G4-Glasfritte filtriert. Der Kristallbrei wurde dünn ausgestrichen und 12 h an der Luft hydrolysiert. Dabei nahm die Schwefelsäure weiteres Wasser auf. Nach Aufrühren der Kristallsuspension in 500 ml Wasser wurden die Kristalle abfiltriert, mit Wasser neutral gewaschen und bei 80°C bis zur Gewichtskonstanz getrocknet.

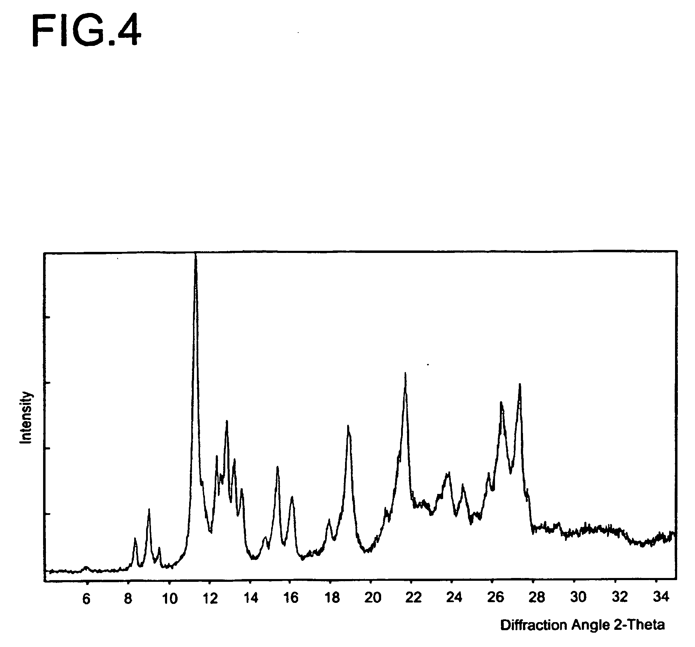

Es wurde die kristalline Form C des Perylimids Ia (Perylimid C) in Form dunkelorangefarbener Kristalle mit wesentlichen Linien im Röntgenpulverdiagramm (CuK_{α}) bei folgenden d-Werten erhalten (Figur 4): 10.67, 9.88, 9.36, 7.82, 7.16, 6.89, 5.74, 5.49, 4.68, 4.085, 3.354 und 3.252 Å.

### Beispiel 11

9,6 kg des Perylimids Ia wurden unter starkem Rühren in 20 min in 144 kg konzentrierter Schwefelsäure (96 gew.-%ig) eingetragen. Bei einer Innentemperatur von 28°C wurde 90 min bis zur vollständigen Lösung gerührt. Dann wurde die Schwefelsäurekonzentration durch Zudosieren von 6,2 kg Wasser in 240 min auf 92 Gew.-% erniedrigt. Der entstandene Kristallbrei wurde abfiltriert, dreimal mit 10 1 87 gew.-%iger Schwefelsäure gewaschen und dann 60 min in 70 1 50-60°C heißem Wasser gerührt. Der Kristallbrei wurde abfiltriert, mit Wasser neutral gewaschen und bei 100°C bis zur Gewichtskonstanz getrocknet.

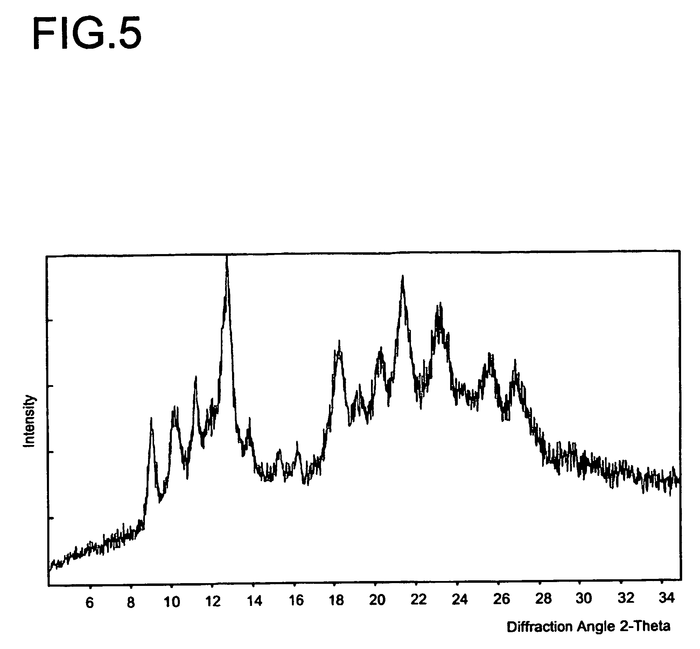

Es wurde die kristalline Form D des Perylimids Ia (Perylimid D) in Form dunkelorangefarbener Kristalle mit wesentlichen Linien im Röntgenpulverdiagramm (CuK_{α}) bei folgenden d-Werten erhalten (Figur 5): 9.7, 8.6, 7.85, 6.88, 4.83, 4.13 und 3.81 Å.

### Beispiel 12

23 g des 1 : 1-Solvates des Perylimids Ia mit NMP (Beispiel 4) wurde 15 h in 146 g Eisessig unter Rückfluß gerührt. Die Kristallsuspension wurde auf 70-80°C erkalten lassen. Der Kristallbrei wurde dann abfiltriert, zunächst mit 32 g 60-70°C heißem Eisessig, dann mit 140 ml Wasser und anschließend mit 500 ml 2 gew.-%iger Ammoniaklösung gewaschen. Nach Neutralwaschen mit Wasser und Verdrängen des Wassers mit Ethanol wurde der Filterkuchen bei 100°C getrocknet.

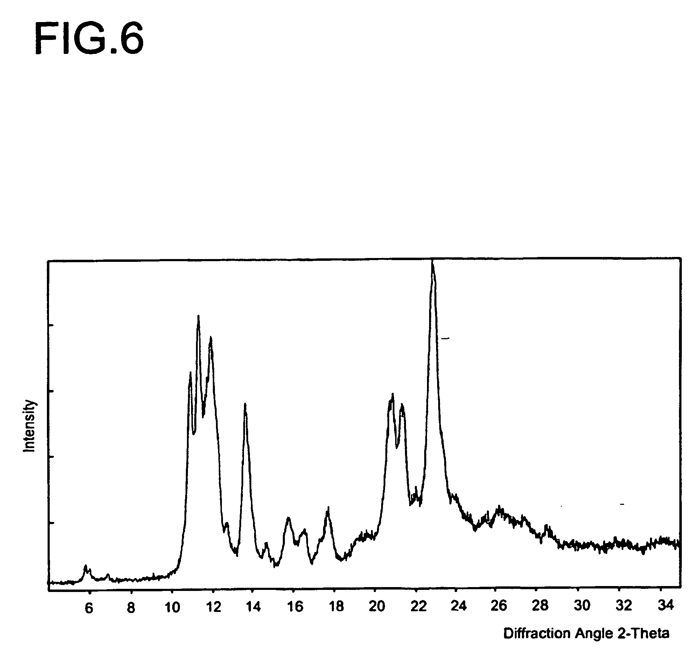

Es wurde die kristalline Form E des Perylimids Ia (Perylimid E) in Form orangefarbener Kristalle mit wesentlichen Linien im Röntgenpulverdiagramm (CuK_{α}) bei folgenden d-Werten erhalten (Figur 6): 15.2, 14.7, 8.04, 7.76, 7.36, 6.43, 5.59, 4.99, 4.25, 4.14 und 3.863 Å.

### Beispiele 13 bis 21

2 g des Perylimids Ia wurden in x ml des Lösungsmittels L bei T°C gelöst. Ungelöstes Ausgangsmaterial wurde bei T°C abfiltriert. Die Filtrate wurden in t h auf Raumtemperatur abgekühlt. Die dabei gebildeten orange bis orangeroten Kristalle wurden abfiltriert und bei Raumtemperatur im Vakuum getrocknet.

Weitere Einzelheiten zu diesen Versuchen sowie die d-Werte der wesentlichen Linien in den jeweiligen Röntgenpulverdiagrammen sind in der folgenden Tabelle zusammengestellt.

**Tabelle**

| Bsp | x [ml] | L | T [°C] | t [h] | d-Werte [Å] |
|---|---|---|---|---|---|
| 13 | 100 | Nitrobenzol | 150 | 4 | 20.4, 11.8, 8.32, 7.81, 7.20, 6.80, 6.49, 6.14, 5.408, 4.947, 4.083, 3.927 |
| 14 | 100 | Phenylglykol | 150 | 4 | 16.1, 14.2, 10.3, 8.48, 7.61, 6.793, 5.180, 4.237 |
| 15 | 100 | n-Butanol | 90 | 2 | 14.7, 8.26, 7.47, 6.44, 5.633, 4.879, 4.240, 3.923, 3.842, 3.743 |
| 16 | 150 | Methylglykol | 60 | 2 | 14.7, 14.45, 7.45, 7.31, 6.40, 4.834, 4.212, 3.894 |
| 17 | 100 | Cyclohexanol | 80 | 2 | 11.8, 8.4, 7.17, 6.48, 5.89, 5.44, 5.284, 4.68, 4.49, 3.55 |
| 18 | 100 | Chlorbenzol | 120 | 6 | 20.5, 13.6, 11.8, 7.75, 7.20, 6.84, 6.58, 6.19, 4.53, 3.956 |
| 19 | 50 | Benzylalkohol | 130 | 6 | 15.6, 9.62, 9.28, 8.296, 7.973, 6.369, 6.045, 5.155, 4.462, 4.157, 3.888, 3.353 |
| 20 | 150 | Butylglykol | 130 | 4 | 7.94, 7.232, 7.12, 5.92, 4.96, 4.79, 4.62, 3.986, 3.63, 3.555 |
| 21 | 75 | Benzoesäuremethylester | 130 | 4 | 15.2, 14.8, 14.4, 8.86, 7.82, 6.84, 6.75, 5.8, 5.00, 4.42 |

## Patentansprüche

1. Verfahren zur Überführung von Perylen-3,4:9,10-tetracarbonsäurediimiden der allgemeinen Formel I 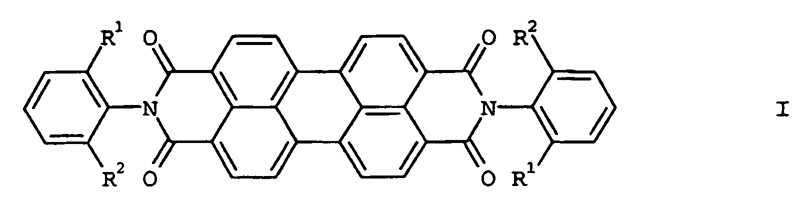 in der R¹ und R² unverzweigtes, verzweigtes oder cyclisches C₁-C₈-Alkyl bedeuten, in eine für die Anwendung als Fluoreszenzfarbmittel geeignete Form, **dadurch gekennzeichnet, daß** man
a) die Perylen-3,4:9,10-tetracarbonsäurediimide in einem organischen oder anorganischen Lösungsmittel, dessen Moleküle ein molekulares Volumen von ≤ 230 Å³ aufweisen, bei 0 bis 250°C löst oder suspendiert,
b1) die in Schritt a) erhaltene Lösung auf oder unter die Kristallisationstemperatur abkühlt und, im Fall eines organischen Lösungsmittels, gewünschtenfalls gleichzeitig solange überschüssiges Lösungsmittel entfernt, bis sich erste Kristalle bilden, oder, im Fall eines anorganischen Lösungsmittels, solange Wasser oder verdünnte wäßrige Lösungen des Lösungsmittels zugibt, bis sich erste Kristalle bilden, und die Lösung zur weiteren Kristallisation bei dieser Temperatur hält oder
b2) die in Schritt a) erhaltene Suspension auf oder unter die Kristallisationstemperatur abkühlt, wenn die Temperatur in Schritt a) über der Kristallisationstemperatur lag, und die Suspension zur weiteren Kristallisation bei dieser Temperatur hält,
c) die in Schritt b) gebildeten Solvatkristalle isoliert und
d) das Lösungsmittel anschließend aus den Solvatkristallen entfernt.

2. Verfahren nach Anspruch 1, **dadurch gekennzeichnet, daß** man als Lösungsmittel Di-C₁-C₄-alkylsulfoxide; Sulfolan; unsubstituierte und N-C₁-C₆-alkylsubstituierte C₄-C₆-Lactame; unsubstituierte und N-C₁-C₆-alkylsubstituierte aliphatische C₁-C₆-Carbonsäureamide; aliphatische Nitrile mit 2 bis 12 C-Atomen; aromatische Nitrile, die durch C₁-C₈-Alkyl, C₁-C₈-Alkoxy und/oder Halogen substituiert sein können; aliphatische C₁-C₁₂-Carbonsäuren und deren C₁-C₆-Alkylester mit einer Gesamtzahl an Kohlenstoffatomen von ≤ 12; Hydroxy-C₂-C₆-carbonsäuren und deren Ester; C₂-C₆-Alkylencarbonate; Benzoesäuren; Naphthoesäuren; Benzoesäure-C₁-C₈-alkylester, Phthalsäuredi-C₂-C₄-alkylester; einwertige und mehrwertige gesättigte und ungesättigte aliphatische und cycloaliphatische C₄-C₁₂-Alkohole; araliphatische Alkohole; Mono- und Oligo-C₂-C₃-alkylenglykolmono- und -di-C₁-C₈-alkyl- und -monophenylether; aliphatische C₃-C₁₂-Ketone; aromatische Ketone, die durch C₁-C₈-Alkyl, C₁-C₈-Alkoxy und/oder Halogen substituiert sein können; aliphatische und cycloaliphatische C₄-C₁₂-Ether; aromatische Ether, die durch C₁-C₈-Alkyl, C₁-C₈-Alkoxy und/oder Halogen substituiert sein können; Heterocyclen; aromatische Kohlenwasserstoffe, die durch C₁-C₈-Alkyl, C₁-C₈-Alkoxy, C₁-C₆-Alkylamino, Di-C₁-C₃-alkylamino, Chlor und/oder Nitro substituiert sein können; aliphatische und cycloaliphatische C₆-C₁₈-Kohlenwasserstoffe; Chlorkohlenwasserstoffe, deren Mischungen oder Kombinationen oder Schwefelsäure einsetzt.

3. Kristallines N,N'-Bis-(2,6-diisopropylphenyl)perylen-3,4:9,10-tetracarbonsäurediimid der Form A, **gekennzeichnet durch** ein Röntgenpulverdiagramm (CuK_{α}) mit wesentlichen Linien bei d-Werten von 10.2, 9.60, 8.17, 7.60, 7.07, 6.89, 6.02, 5.64, 4.89, 4.79, 4.63, 3.93, 3.81, 3.53 und 3.43 Å.

4. Kristallines N,N'-Bis-(2,6-diisopropylphenyl)perylen-3,4:9,10-tetracarbonsäurediimid der Form B, **gekennzeichnet durch** ein Röntgenpulverdiagramm (CuK_{α}) mit wesentlichen Linien bei d-Werten von 15.3, 7.68, 7.32, 7.15, 5.99, 5.59, 5.33, 4.98, 4.24, 3.86 und 3.235 Å.

5. Kristallines N,N'-Bis-(2,6-diisopropylphenyl)perylen-3,4:9,10-tetracarbonsäurediimid der Form C, **gekennzeichnet durch** ein Röntgenpulverdiagramm (CuK_{α}) mit wesentlichen Linien bei d-Werten von 10.67, 9.88, 9.36, 7.82, 7.16, 6.89, 5.74, 5.49, 4.68, 4.085, 3.354 und 3.252 Å.

6. Kristallines N,N'-Bis-(2,6-diisopropylphenyl)perylen-3,4:9,10-tetracarbonsäurediimid der Form D, **gekennzeichnet durch** ein Röntgenpulverdiagramm (CuK_{α}) mit wesentlichen Linien bei d-Werten von 9.7, 8.6, 7.85, 6.88, 4.83, 4.13 und 3.81 Å.

7. Kristallines N,N'-Bis-(2,6-diisopropylphenyl)perylen-3,4:9,10-tetracarbonsäurediimid der Form E, **gekennzeichnet durch** ein Röntgenpulverdiagramm (CuK_{α}) mit wesentlichen Linien bei d-Werten von 15.2, 14.7, 8.04, 7.76, 7.36, 6.43, 5.59, 4.99, 4.25, 4.14 und 3.863 Å.

8. Kristalline Solvate der Perylen-3,4:9,10-tetracarbonsäurediimide der Formel I gemäß Anspruch 1, die pro mol Perylen-3,4:9,10-tetracarbonsäurediimid 1 oder 2 mol Lösungsmittel enthalten.

9. Verwendung von Perylen-3,4:9,10-tetracarbonsäurediimiden gemäß den Ansprüchen 1 bis 7 als Fluoreszenzfarbstoffe zum Einfärben von organischen und anorganischen polymeren Materialien.

10. Verwendung von Perylen-3,4:9,10-tetracarbonsäurediimiden gemäß den Ansprüchen 1 bis 7 als Emittermaterialien in elektrooptischen Bauteilen.

## Claims

1. A process for converting perylene-3,4:9,10-tetracarboxylic diimides of the general formula I 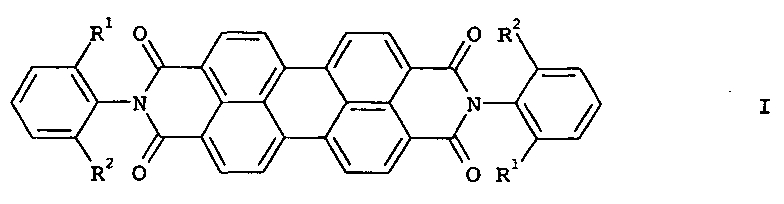 in which R¹ and R² are each unbranched, branched or cyclic C₁-C₈-alkyl to a form suitable for use as fluorescent dyes, which comprises
a) dissolving or suspending the perylene-3,4:9,10-tetracarboxylic diimides in an organic or inorganic solvent whose molecules have a molecular volume of s 230 Å³ at from 0 to 250°C,
b1) cooling the solution obtained in step a) to or below the crystallization temperature and, in the case of an organic solvent, if desired at the same time removing excess solvent until the first crystals form, or, in the case of an inorganic solvent, adding water or dilute aqueous solutions of the solvent until the first crystals form, and maintaining the solution at this temperature for further crystallization or
b2) cooling the suspension obtained in step a) to or below the crystallization temperature when the temperature in step a) was above the crystallization temperature, and maintaining the suspension at this temperature for further crystallization,
c) isolating the solvate crystals formed in step b) and
d) then removing the solvent from the solvate crystals.

2. A process as claimed in claim 1, wherein the solvent used is a di-C₁-C₄-alkyl sulfoxide; a sulfolane; an unsubstituted or N-C₁-C₆-alkyl-substituted C₄-C₆-lactam; an unsubstituted or N-C₁-C₆-alkyl-substituted aliphatic C₁-C₆-carboxamide; an aliphatic nitrile having from 2 to 12 carbon atoms; an aromatic nitrile which may be substituted by C₁-C₈-alkyl, C₁-C₈-alkoxy and/or halogen; an aliphatic C₁-C₁₂-carboxylic acid or its C₁-C₆-alkyl esters having a total number of carbon atoms of ≤ 12; a hydroxy-C₂-C₆-carboxylic acid or its esters; a C₂-C₆-alkylene carbonate; a benzoic acid; a naphthoic acid; a C₁-C₈-alkyl benzoate, a di-C₂-C₄-alkyl phthalate; a monohydric or polyhydric, saturated or unsaturated, aliphatic or cycloaliphatic C₄-C₁₂-alcohol; an araliphatic alcohol; a mono- or oligo-C₂-C₃-alkylene glycol mono- and -di-C₁-C₈-alkyl- and monophenyl ether; an aliphatic C₃-C₁₂-ketone; an aromatic ketone which may be substituted by C₁-C₈-alkyl, C₁-C₈-alkoxy and/or halogen; an aliphatic or cycloaliphatic C₄-C₁₂-ether; an aromatic ether which may be substituted by C₁-C₈-alkyl, C₁-C₈-alkoxy and/or halogen; a heterocycle; an aromatic hydrocarbon which may be substituted by C₁-C₈-alkyl, C₁-C₈-alkoxy, C₁-C₆-alkylamino, di-C₁-C₃-alkylamino, chlorine and/or nitro; an aliphatic or cycloaliphatic C₆-C₁₈-hydrocarbon; a chloro hydrocarbon; or a mixture or combination thereof, or sulfuric acid.

3. A crystalline N,N'-bis(2,6-diisopropylphenyl)perylene-3,4:9,10-tetracarboxylic diimide of the form A, **characterized by** an X-ray powder diagram (CuK_{α}) having significant lines at d values of 10.2, 9.60, 8.17, 7.60, 7.07, 6.89, 6.02, 5.64, 4.89, 4.79, 4.63, 3.93, 3.81, 3.53 and 3.43 Å.

4. A crystalline N,N'-bis(2,6-diisopropylphenyl)perylene-3,4:9,10-tetracarboxylic diimide of the form B, **characterized by** an X-ray powder diagram (CuK_{α}) having significant lines at d values of 15.3, 7.68, 7.32, 7.15, 5.99, 5.59, 5.33, 4.98, 4.24, 3.86 and 3.235 Å.

5. A crystalline N,N'-bis(2,6-diisopropylphenyl)perylene-3,4:9,10-tetracarboxylic diimide of the form C, **characterized by** an X-ray powder diagram (CuK_{α}) having significant lines at d values of 10.67, 9.88, 9.36, 7.82, 7.16, 6.89, 5.74, 5.49, 4.68, 4.085, 3.354 and 3.252 Å.

6. A crystalline N,N'-bis(2,6-diisopropylphenyl)perylene-3,4:9,10-tetracarboxylic diimide of the form D, **characterized by** an X-ray powder diagram (CuK_{α}) having significant lines at d values of 9.7, 8.6, 7.85, 6.88, 4.83, 4.13 and 3.81 Å.

7. A crystalline N,N'-bis(2,6-diisopropylphenyl)perylene-3,4:9,10-tetracarboxylic diimide of the form E, **characterized by** an X-ray powder diagram (CuK_{α}) having significant lines at d values of 15.2, 14.7, 8.04, 7.76, 7.36, 6.43, 5.59, 4.99, 4.25, 4.14 and 3.863 Å.

8. A crystalline solvate of perylene-3,4:9,10-tetracarboxylic diimide of the formula I as claimed in claim 1, which contains 1 or 2 mol of solvent per mole of perylene-3,4:9,10-tetracarboxylic diimide.

9. The use of perylene-3,4:9,10-tetracarboxylic diimides as claimed in claims 1 to 7 as fluorescent dyes for coloring organic and inorganic polymeric materials.

10. The use of perylene-3,4:9,10-tetracarboxylic diimides as claimed in claims 1 to 7 as emitter materials in electrooptical components.

## Revendications

1. Procédé de transformation de diimides d'acide pérylène-3,4:9,10-tétracarboxylique de la formule générale I 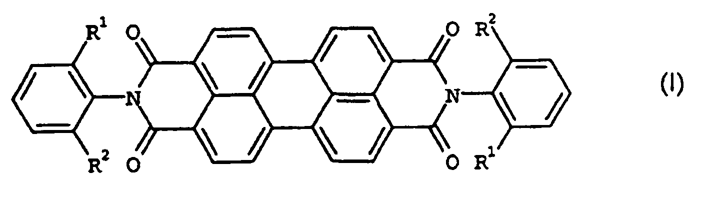 dans laquelle R¹ et R ² représentent un groupe alkyle en C₁-C₈ non ramifié, ramifié ou cyclique, en une forme appropriée pour l'application comme colorant fluorescent, **caractérisé en ce que**
a) de 0 jusqu'à 250°C on dissout ou met en suspension les diimides d'acide pérylène-3,4:9,10-tétracarboxylique dans un solvant organique ou inorganique dont les molécules présentent un volume moléculaire de ≤ 230 Å³,
b1) on refroidit la solution obtenue dans l'étape a) à ou sous la température de cristallisation et, dans le cas d'un solvant organique, on élimine éventuellement simultanément du solvant excédentaire jusqu'à ce que des premiers cristaux se forment, ou, dans le cas d'un solvant inorganique, on ajoute de l'eau ou des solutions aqueuses diluées du solvant jusqu'à ce que des premiers cristaux se forment, et on maintient la solution à cette température pour la cristallisation ultérieure, ou
b2) on refroidit la suspension obtenue dans l'étape a) à ou sous la température de cristallisation lorsque la température dans l'étape a) est supérieure à la température de cristallisation, et on maintient la suspension à cette température pour la cristallisation ultérieure,
c) on isole les cristaux de solvate formés dans l'étape b), et
d) on élimine ensuite le solvant des cristaux de solvate.

2. Procédé suivant la revendication 1, **caractérisé en ce que**, comme solvant, on met en oeuvre des di-C₁-C₄-alkylsulfoxydes, du sulfolane, des lactames en C₄-C₆ non substitués et substitués par du N-C₁-C₆-alkyle, des amides d'acide carboxylique aliphatiques en C₁-C₆ non substitués et substitués par du N-C₁-C₆-alkyle, des nitriles aliphatiques comportant 2 à 12 atomes de C, des nitriles aromatiques, qui peuvent être substitués par de l'alkyle en C₁-C₈, de l'alcoxy en C₁-C₈ et/ou de l'halogène, des acides carboxyliques aliphatiques en C₁-C₁₂ et leurs esters alkyliques en C₁-C₆ ayant un nombre total d'atomes de carbone de ≤ 12, des acides hydroxycarboxyliques en C₂-C₆ et leurs esters, des carbonates d'alkylène en C₂-C₆, des acides benzoïques, des acides naphtoïques, des esters alkyliques en C₁-C₈ d'acide benzoïque, des esters di-C₂-C₄-alkyliques d'acide phtalique, des alcools aliphatiques et cycloaliphatiques en C₄-C₁₂, saturés et insaturés, monofonctionnels et plurifonctionnels, des alcools araliphatiques, des éthers mono- et di-C₁-C₈-alkyliques et monophényliques de mono- et oligo- C₂-C₃-alkylène glycol, des cétones aliphatiques en C₃-C₁₂, des cétones aromatiques qui peuvent être substituées par de l'alkyle en C₁-C₈, de l'alcoxy en C₁-C₈ et/ou de l'halogène, des éthers aliphatiques et cycloaliphatiques en C₄-C₁₂, des éthers aromatiques qui peuvent être substitués par de l'alkyle en C₁-C₈, de l'alcoxy en C₁-C₈ et/ou de l'halogène, des hétérocycles, des hydrocarbures aromatiques, qui peuvent être substitués par du chlore, un groupe alkyle en C₁-C₈, alcoxy en C₁-C₈, alkylamino en C₁-C₆, di-C₁-C₃-alkylamino et/ou nitro, des hydrocarbures aliphatiques et cycloaliphatiques en C₆-C₁₈, des hydrocarbures chlorés, leurs mélanges ou combinaisons ou de l'acide sulfurique.

3. Diimide d'acide N,N'-bis-(2,6-diisopropylphényl)-pérylène-3,4:9,10-tétracarboxylique cristallin de la forme A, **caractérisé par** un diagramme de poudre aux rayons X (CuK_{α}) ayant des lignes essentielles aux valeurs d de 10,2, 9,60, 8,17, 7,60, 7,07, 6,89, 6,02, 5,64, 4,89, 4,79, 4,63, 3,93, 3,81, 3,53 et 3,43 Å.

4. Diimide d'acide N,N'-bis-(2,6-diisopropylphényl)-pérylène-3,4:9,10-tétracarboxylique cristallin de la forme B, **caractérisé par** un diagramme de poudre aux rayons X (CuK_{α}) ayant des lignes essentielles aux valeurs d de 15,3, 7,68, 7,32, 7,15, 5,99, 5,59, 5,33, 4,98, 4,24, 3,86 et 3,235 Å.

5. Diimide d'acide N,N'-bis-(2,6-diisopropylphényl)-pérylène-3,4:9,10-tétracarboxylique cristallin de la forme C, **caractérisé par** un diagramme de poudre aux rayons X (CuK_{α}) ayant des lignes essentielles aux valeurs d de 10,67, 9,88, 9,36, 7,82, 7,16, 6,89, 5,74, 5,49, 4,68, 4,085, 3,354 et 3,252 Å.

6. Diimide d'acide N,N'-bis-(2,6-diisopropylphényl)-pérylène-3,4:9,10-tétracarboxylique cristallin de la forme D, **caractérisé par** un diagramme de poudre aux rayons X (CuK_{α}) ayant des lignes essentielles aux valeurs d de 9,7, 8,6, 7,85, 6,88, 4,83, 4,13, et 3,81 Å.

7. Diimide d'acide N,N'-bis-(2,6-diisopropylphényl)-pérylène-3,4:9,10-tétracarboxylique cristallin de la forme E, **caractérisé par** un diagramme de poudre aux rayons X (CuK_{α}) ayant des lignes essentielles aux valeurs d de 15,2, 14,7, 8,04, 7,76, 7,36, 6,43, 5,59, 4,99, 4,25, 4,14 et 3,863 Å.

8. Solvates cristallins des diimides d'acide pérylène-3,4:9,10-tétracarboxylique de la formule I suivant la revendication 1, qui contiennent, par mole de diimide d'acide pérylène-3,4:9,10-tétracarboxylique, 1 ou 2 moles de solvant.

9. Utilisation de diimides d'acide pérylène-3,4:9,10-tétracarboxylique suivant les revendications 1 à 7, comme colorants fluorescents pour teindre des matériaux polymères organiques et inorganiques.

10. Utilisation de diimides d'acide pérylène-3,4:9,10-tétracarboxylique suivant les revendications 1 à 7, comme matières émettrices dans des composants électro-optiques.
